Europäisches Patentamt

European Patent Office

Office européen des brevets

(19)

(11) **EP 0 742 453 A1**

(12) ## DEMANDE DE BREVET EUROPEEN

(43) Date de publication:
13.11.1996 Bulletin 1996/46

(51) Int. Cl.$^6$: **G02B 5/08**, G02B 5/28, G02B 1/10

(21) Numéro de dépôt: 95401108.6

(22) Date de dépôt: 12.05.1995

(84) Etats contractants désignés:
CH DE GB LI

(71) Demandeurs:
• COMMISSARIAT A L'ENERGIE ATOMIQUE
75015 Paris Cédex 15 (FR)
• ETAT FRANCAIS
Représenté par le délégué général
pour l'armement
F-00460 Armées (FR)

(72) Inventeurs:
• Ida, Michel
F-38340 Voreppe (FR)
• Chaton, Patrick
F-38570 Tencin (FR)

(74) Mandataire: Dubois-Chabert, Guy et al
c/o BREVATOME
25, rue de Ponthieu
75008 Paris (FR)

(54) **Miroir à large bande et à haute réflectivité et procédé de réalisation d'un tel miroir**

(57) Ce miroir comportant un empilement (4) disposé sur un substrat (8) et formé d'une alternance de couches (12, 14) d'un premier matériau ayant un premier indice de réfraction ($n_1$) et de couches d'un second matériau ayant un second indice de réfraction ($n_2$) supérieur au premier indice de réfraction ($n_1$), se caractérise en ce qu'il comporte en outre une couche de surface (6) d'un troisième matériau disposée sur l'empilement, ladite couche de surface (6) présentant un indice de réfraction qui varie selon un profil continu.

L'invention s'applique à des miroirs pour lasers à flux intense.

FIG. 1

## Description

DOMAINE TECHNIQUE

La présente invention concerne un miroir à large bande et à haute réflectivité.

Elle concerne plus précisément des miroirs utilisables à la fois en incidence normale et en incidence oblique avec des angles supérieurs à 45°.

Selon leur domaine spectral, ces miroirs sont utilisés, par exemple, comme miroirs à large bande pour laser accordable. Ils peuvent également être utilisés dans des lasers à fort flux ou dans des dispositifs à plusieurs longueurs d'onde.

ETAT DE LA TECHNIQUE ANTERIEURE

Le problème que se propose de résoudre l'invention est celui d'obtenir un miroir qui ait à la fois une bande de réflexion étendue, une bonne réflectivité, et une bonne tenue au flux lumineux.

On entend par "bande de réflexion" d'un miroir la largeur du spectre de longueur d'onde (ou de fréquence) pour lequel la réflectivité, c'est-à-dire le rapport entre l'intensité du flux réfléchi et l'intensité du flux incident est supérieure à une valeur déterminée.

Une bonne réflectivité est obtenue de manière connue en empilant une alternance de couches de matériaux diélectriques de haut et bas indices de réfraction $n_1$ et $n_2$ avec $n_2 > n_1$ et ayant une épaisseur optique égale au quart de la longueur d'onde centrale de la bande du miroir. Un tel empilement est communément désigné par miroir de Bragg. Il est de préférence réalisé sur un substrat transparent.

Le document (1) se rapporte à différents types de miroirs et notamment à des miroirs formés par un empilement alterné de couches. Comme tous les documents cités dans la suite du texte, il est mentionné à la fin de la description.

Selon ce document, la réflectivité R pour un miroir de Bragg s'exprime comme suit :

$$R = \left[\frac{1-\left(\frac{n_s}{n_a}\right)\left(\frac{n_2}{n_1}\right)^{2N}}{1+\left(\frac{n_s}{n_a}\right)\left(\frac{n_2}{n_1}\right)^{2N}}\right]^2$$

où $n_a$ est l'indice de réfraction de l'air et N le nombre de paires de couches de haut et bas indice ($n_1$, $n_2$).

La largeur de la bande $\Delta\lambda$ d'un tel miroir s'exprime comme suit :

$$\Delta\lambda = \lambda_c \cdot \frac{2}{\pi} \cdot \frac{\Delta_n}{\langle n \rangle}$$

où $\lambda_c$ est la longueur d'onde centrale, $\Delta_n$ l'écart $n_2 - n_1$ des indices et $\langle n \rangle$ l'indice moyen entre les deux matériaux.

Il apparaît que la largeur de la bande est liée essentiellement à la différence entre l'indice haut et l'indice bas.

Les matériaux les plus utilisés pour de tels miroirs sont les suivants : l'oxyde de silicium ($SiO_2$), l'oxyde de titane ($TiO_2$), l'oxyde de hafnium ($HfO_2$) et l'oxyde de zirconium ($ZrO_2$) ; $SiO_2$ étant utilisé comme matériau de bas indice.

Parmi ces matériaux le $TiO_2$ possède l'indice de réfraction le plus élevé (n=2,45) et est donc retenu avec le $SiO_2$ pour la réalisation de miroirs à large bande.

Malheureusement, comme l'explique le document (2), les miroirs réalisés avec le couple de matériaux $TiO_2$-$SiO_2$ n'ont pas une très bonne tenue au flux laser, comparativement aux miroirs réalisés avec les couples $HFO_2$-$SiO_2$ ou $ZrO_2$-$SiO_2$. Le $TiO_2$ est donc écarté.

Les conditions de bande large et de bonne réflectivité apparaissent comme difficilement conciliables avec une tenue satisfaisante aux flux laser intenses.

Une solution au problème, évoquée dans le document (3) aux pages 175 et suivantes, consiste de façon connue d'empiler deux miroirs de Bragg, les miroirs étant centrés sur deux longueurs d'ondes décalées $\lambda_1$ et $\lambda_2$. Les longueurs d'onde $\lambda_1$ et $\lambda_2$ sont choisies suffisamment proches pour ne pas introduire de discontinuité notable dans la bande de réflexion du miroir résultant. Cette bande est en quelque sorte la somme des bandes de réflexion des deux miroirs individuels. Les bandes de réflexion des miroirs individuels peuvent donc être un peu moins larges, ce qui permet d'utiliser les couples de matériaux présentant une différence d'indices plus faible mais ayant une meilleure tenue au flux.

Un tel miroir n'est pas tout à fait satisfaisant. Outre des problèmes de réflectivité réduite dans la partie de recouvrement des bandes spectrales des deux miroirs de Bragg, une telle structure pêche par la difficulté technologique de sa réalisation. En effet, l'empilement de deux miroirs entraîne une augmentation conséquente de l'épaisseur de la structure. L'empilement qui peut atteindre plus de 5 µm pour un miroir de réflectivité supérieur à 99,5% est très fragile. De plus, des contraintes mécaniques internes augmentent encore le risque de destruction de la structure. Etant donné le choix restreint des matériaux pour réaliser les empilements, il est difficile de répondre aussi aux exigences de tenue mécanique. Le rendement de la fabrication en est réduit et le coût des miroirs doubles devient trop important.

Par ailleurs, et comme évoqué plus haut, l'empilement des deux miroirs de Bragg forme en quelque sorte une cavité de type Pérot-Fabry qui génère un pic de transmission important dans la bande spectrale, notamment pour des longueurs d'onde situées à l'intersection des bandes de réflexion des miroirs individuels. Finalement, une structure de miroir double ne constitue pas une solution satisfaisante.

Pour obtenir un miroir à large bande, une autre possibilité encore, également évoquée dans le document (3) consiste à réaliser un empilement dont chaque couche a une épaisseur optique égale à

$$\frac{\lambda_o}{4} + \delta\lambda$$

où $\lambda_o$ est la longueur d'onde de centrage de la bande du miroir et $\delta\lambda$ un écart autour de $\lambda_o$ calculé pour chaque couche.

Un tel miroir est difficile et cher à réaliser en raison notamment de la nécessité de déterminer $\delta\lambda$ pour chaque couche, la nécessité d'un contrôle très précis de l'épaisseur des couches, et en raison du nombre de couches important qui est indispensable pour obtenir une réflectivité convenable sur toute la bande spectrale du miroir.

Finalement, il apparaît qu'il est très difficile d'obtenir des miroirs adaptés par exemple aux lasers accordables à flux intense, pour un coût de fabrication raisonnable.

Un objet de la présente invention est de fournir un miroir de forte réflectivité, de large bande passante et de bonne tenue au flux lumineux laser ne présentant pas les inconvénients des miroirs de l'art antérieur évoqués dans ce qui précède.

Un autre objet est de proposer un procédé de réalisation d'un tel miroir.

EXPOSE DE L'INVENTION

Le miroir de l'invention associe un miroir composé de couches discrètes alternées d'indice $n_1$ et $n_2$ et une couche d'indice continûment variable.

A cet effet, le miroir de l'invention comporte un substrat, un empilement disposé sur le substrat et formé d'une alternance de couches d'un premier matériau ayant un premier indice de réfraction et de couches d'un second matériau ayant un second indice de réfraction supérieur au premier indice de réfraction, et une couche d'un troisième matériau disposée sur l'empilement, ladite couche présentant un indice de réfraction qui varie selon un profil continu. La couche du troisième matériau ne présente donc pas de "sauts d'indice" d'une valeur a une autre comme l'empilement.

En adaptant le profil d'indice de cette couche aux conditions d'utilisation du miroir, il est possible non seulement d'augmenter la bande de réflexion et la réflectivité du miroir, mais aussi de réduire de manière importante le champ électrique du flux lumineux pénétrant dans l'empilement de couches discrètes. Selon un aspect de l'invention, le profil de l'indice est choisi périodique, par exemple sinusoïdal. Le calcul du profil d'indice de réfraction est obtenu par exemple avec un algorithme dit de recuit et de minimisation d'entropie, détaillé dans le document (4).

Dans cet algorithme, la fonction Ci représente l'écart entre les propriétés optiques calculées et les propriétés optiques recherchées pour une configuration i donnée de paramètres.

$\Delta$Ci étant une variation de cette fonction après une perturbation élémentaire.

Après chaque perturbation, les propriétés optiques peuvent être calculées par un modèle matriciel pour des couches homogènes isotropes à face plane parallèle. Le principe de ce calcul est donné en détail par exemple dans le document (1).

Pour ce calcul, la couche à variation continue d'indice est décomposée en couches discrètes. Par exemple, une période de sinusoïde peut être décomposée en 30 couches élémentaires auxquelles sont associées des matrices caractéristiques. Le produit de ces matrices et de matrices associées au miroir de Bragg formé par l'empilement donne les propriétés optiques de l'ensemble de la structure. Pour ces calculs, on se référera utilement au document (5).

Ainsi, la couche à indice variable permet-elle non seulement d'élargir la bande spectrale du miroir et d'augmenter sa réflectivité, mais aussi de protéger l'empilement des champs électriques trop élevés.

L'empilement est réalisé préférentiellement avec le couple de matériaux $SiO_2$-$TiO_2$ choisi car il permet de réaliser des miroirs qui possèdent des largeurs de bande spectrale plus grandes que celles des miroirs réalisés avec d'autres couples de matériaux. L'empilement peut constituer un miroir de Bragg.

Dans ce cas, l'épaisseur de chacune des couches de l'empilement est égale à $\lambda_o/4$ où $\lambda_o$ est la longueur d'onde de centrage du miroir. Grâce à la couche à indice variable, cet empilement est soumis à un flux plus modéré que le flux incident.

Selon une variante intéressante, le miroir comporte en outre une couche métallique disposée entre le substrat et l'empilement. Cette couche métallique permet d'accroître la réflectivité du miroir et par conséquent de réduire le nombre de couches de l'empilement. L'aluminium est un exemple de métal convenant bien en raison de sa forte réflectivité et de la large bande spectrale de réflexion.

Avantageusement, le substrat peut être réalisé en silice, en quartz, en verre ou en céramique. Le choix du substrat peut influer sur la réponse spectrale recherchée. Toutefois, dans le cas où une couche métallique est prévue pour augmenter la réflectivité du miroir, le substrat sera choisi en fonction d'autres propriétés, telles que sa conduction thermique.

Pour réaliser un miroir conforme à l'invention, on a avantageusement recours à un procédé comportant les étapes suivantes :

    a) - dépôt sur un substrat d'une couche métallique,
    b) - formation sur la couche métallique d'un empilement alterné de couches d'un premier et d'un second matériaux ayant respectivement un premier indice de réfraction et un second indice de réfraction supérieur au premier indice de réfraction,
    c) - formation sur l'empilement d'une couche d'un troisième matériau présentant un indice de réfraction qui varie selon un profil continu.

L'empilement alterné est réalisé, par exemple, selon une technique de pulvérisation par faisceau d'ions dite IBS (Ion Beam Sputtering). Cette technique de dépôt est très avantageuse pour le dépôt de diélectriques en raison de son caractère énergétique. Elle permet d'obtenir des matériaux denses, et d'indice optique élevé, très intéressants dans le cadre de la présente application. Une illustration en est donnée notamment dans le document (6).

Pour la couche à indice variable, pour laquelle un contrôle très précis du dépôt est requis, on utilise de préférence une technique de pulvérisation à faisceau d'ions, assistée par faisceau d'ions, dite DIBS (Dual Ion Beam Sputtering).

Un exemple de la technique DIBS est illustré par la publication de S.J. Holmes dans le document (7).

Cette technique, mettant en oeuvre une cible de silicium dans une atmosphère réactive d'oxygène et d'azote permet de contrôler finement la réalisation d'un dépôt d'oxynitrure de silicium dont le profil d'indice peut être ajusté continûment en modulant la pression partielle d'oxygène par rapport à la pression partielle d'azote.

### BREVE DESCRIPTION DES FIGURES

- la figure 1 est une coupe schématique d'un miroir selon l'invention,
- la figure 2 représente le profil d'indice d'une couche à indice variable et d'un empilement alterné, conformes à un aspect de l'invention,
- la figure 3 représente graphiquement la bande spectrale d'un miroir connu et de miroirs selon l'invention,
- les figures 4 à 7 illustrent les composantes parallèles et perpendiculaires du champ électrique d'un flux incident, dans le miroir de l'invention.

### DESCRIPTION DETAILLEE D'UN MODE DE REALISATION

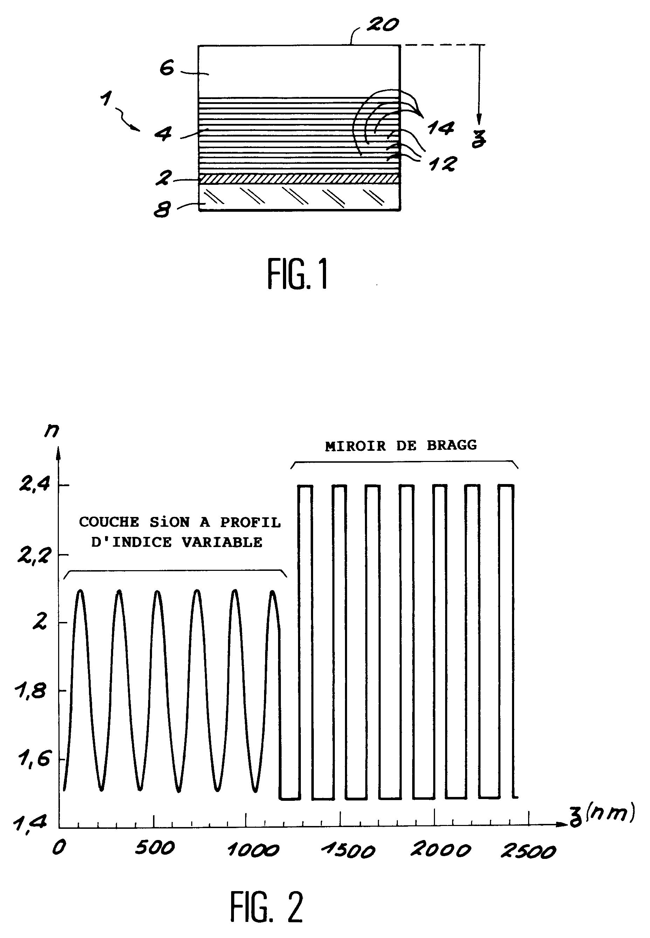

La structure du miroir 1 représentée à la figure 1 comporte une couche métallique 2, un empilement alterné 4, par exemple un miroir de Bragg, et une couche à indice variable 6, empilés dans cet ordre sur un substrat 8. Dans la réalisation décrite à titre d'exemple, le miroir 1 est centré sur une longueur d'onde $\lambda_o$=652 nm et a une largeur de bande spectrale $\Delta\lambda$=145 nm avec une réflectivité R$\geqq$99,7% pour un flux arrivant à 45° en polarisation P.

Le substrat ne joue dans cette réalisation aucun rôle optique, dans la mesure où il est recouvert par la couche métallique 2. Le substrat est réalisé par exemple en silicium.

Pour la couche 2, on peut choisir des métaux tels que l'aluminium ou l'argent qui ont l'avantage d'une bonne réflectivité dans le spectre visible et infrarouge et d'une bande spectrale étendue. Toutefois, l'aluminium est préféré à l'argent dans la mesure où sa dégradation au contact de l'air est moins rapide.

Le dépôt de cette couche a lieu par exemple par une technique traditionnelle de dépôt par évaporation sous vide.

L'empilement 4 est réalisé de préférence par une technique de pulvérisation par faisceau d'ions. Dans le présent exemple, l'empilement 4 est un miroir de Bragg qui comporte sept paires de couches alternées.

Chaque paire de couches est formée d'une couche 12 de $TiO_2$ d'indice de réfraction $n_2$=2,4 et d'une épaisseur de 68 nm et d'une couche 14 de $SiO_2$ d'indice de réfraction $n_1$=1,48 et d'épaisseur 110 nm.

La couche 6 à indice variable est réalisée selon la technique DIBS. Dans le cadre de l'exemple décrit, le profil d'indice, choisi sinusoïdal, est optimisé pour la condition particulièrement difficile d'une polarisation P à 45° ($\pi$/4 radians) d'incidence.

La couche 6, en oxynitrure de silicium présente un indice de réfraction centré sur $\langle n \rangle$=1,8 et variant avec une amplitude $\Delta n$=±0,3 selon une période p=205 nm et avec une phase à l'origine $\phi$=4 radians.

L'indice n varie selon une direction perpendiculaire à la couche 6 et en fonction d'une épaisseur z mesurée à partir de la surface 20 du miroir.

La valeur de l'indice en fonction de z est donnée par la formule :

$$n(z) = \langle n \rangle + \Delta n.\sin\left(\frac{2\pi}{p}z+\phi\right)$$

La figure 2 illustre le profil d'indice du miroir.

L'indice, reporté en ordonnée, est exprimé en fonction de l'épaisseur z mesurée à partir de la surface 20, reportée en abscisse et exprimée en nanomètres.

On vérifie que l'indice de réfraction de la couche 6 varie sinusoïdalement entre 1,5 et 2,1 avec une période de 205 nm. Le miroir de Bragg se distingue par des valeurs discontinues d'indices correspondant à n=1,48 pour le $SiO_2$ et $n_2$=2,4 pour le $TiO_2$.

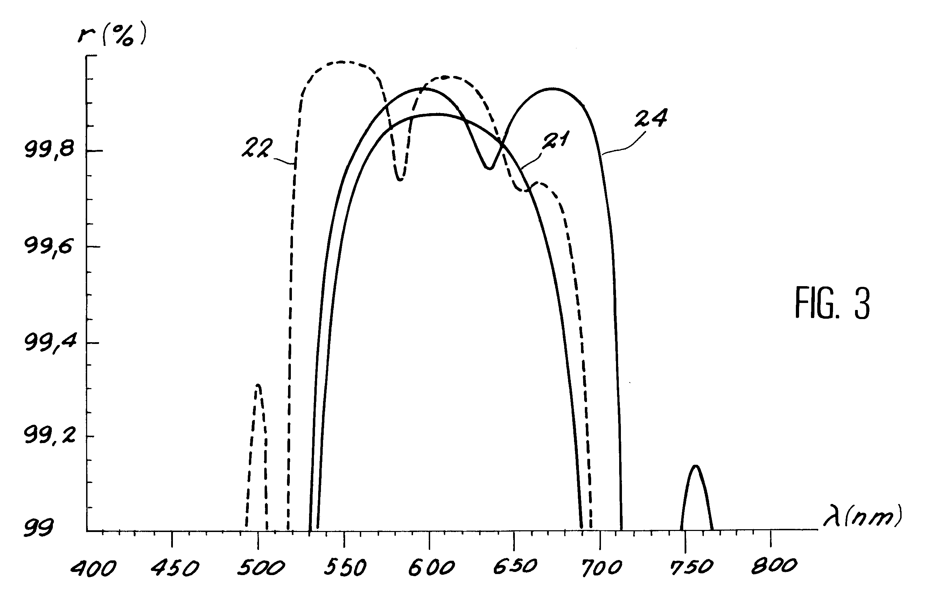

La figure 3 met en évidence l'augmentation de la réflectivité et l'élargissement de la bande spectrale du miroir selon l'invention.

Sur cette figure, la courbe 21 donne la réflectivité en fonction de la longueur d'onde d'un miroir traditionnel formé d'une couche métallique et d'un miroir de Bragg centré sur 652 nm.

Les courbes 22 et 24 correspondent à un miroir selon l'invention où la couche à indice variable d'oxynitrure de silicium (SiON) a été respectivement optimisée pour élargir la bande spectrale vers les petites et les grandes longueurs d'onde. On constate que la largeur de la bande des miroirs selon l'invention, respectivement 150 nm et 160 nm est bien supérieure à la largeur spectrale de la bande du miroir classique correspondant à la courbe 21, qui est de 105 nm.

Par ailleurs, la couche d'oxynitrure de silicium du miroir selon l'invention permet de réduire dans des proportions importantes le champ électrique du flux incident qui entre dans le miroir de Bragg.

Pour exprimer ce champ on le décompose en une composante Ep parallèle au plan d'incidence du miroir et en une composante Es perpendiculaire au plan d'incidence.

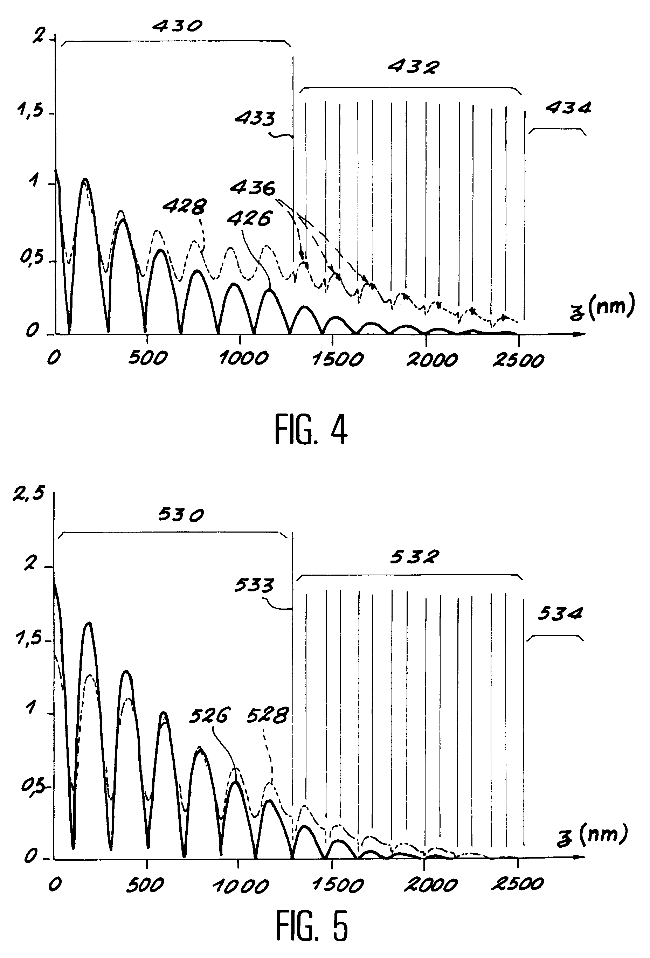

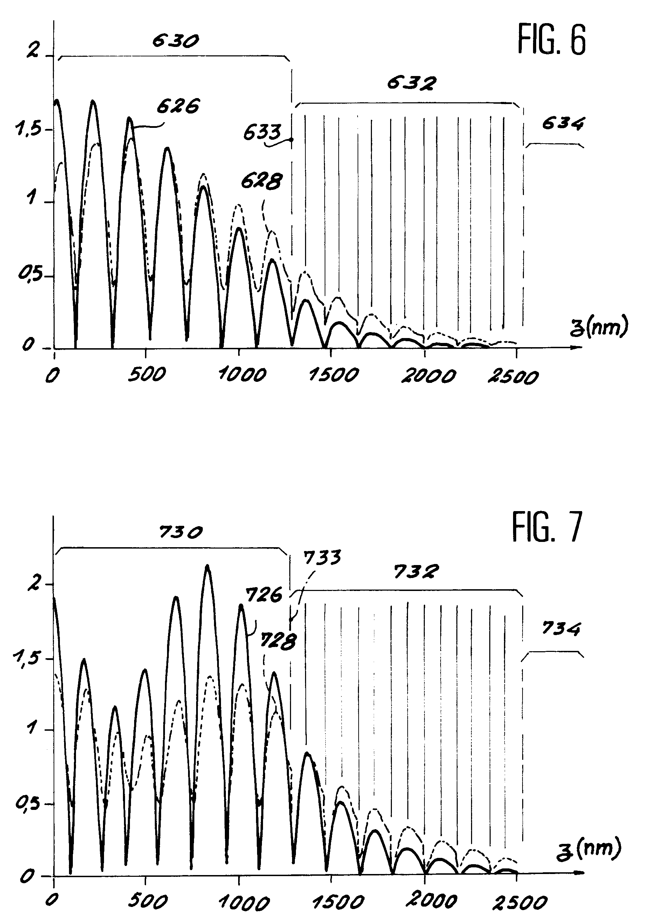

Les figures 4 à 7 donnent les composantes perpendiculaire S et parallèle P du champ électrique en fonction de l'épaisseur z du miroir décrit dans ce qui précède et pour différentes longueurs d'onde choisies dans la bande spectrale du miroir où la réflectivité est supérieure à 99,7% (680, 625, 600 et 550 nm).

A la figure 4, les composantes S et P du champ sont respectivement représentées par des courbes de référence 426 et 428. Elles correspondent à un flux incident à 45° ayant une longueur d'onde de l'ordre de 680 nm.

On distingue sur la figure 4 une première région 430 correspondant à la couche à indice variable 6, une seconde région 432 correspondant au miroir de Bragg 4 où des pointillés 433 rappellent les couches 12, 14, et une troisième région 434 correspondant à la couche d'aluminium. Dans la région 432, on peut noter des discontinuités 436 correspondant aux interfaces entre couches de haut et bas indice de réfraction.

Sur les figures 5, 6 et 7 qui correspondent toujours à un flux incident à 45°, mais pour des longueurs d'onde respectivement de l'ordre de 625, 600 et 550 nm, les éléments correspondant à ceux de la figure 4 portent des références correspondantes mais dont le chiffre des centaines indique le numéro de la figure.

De manière générale, on constate sur les figures 4 à 7 que grâce à la couche à indice variable pour des longueurs d'onde assez proches de $\lambda_0$, le champ électrique atteignant l'empilement 4 est nettement atténué par rapport au champ électrique à la surface. L'empilement est donc protégé des flux très intenses.

**LES DOCUMENTS MENTIONNES DANS CE QUI PRECEDE PORTENT LES REFERENCES SUIVANTES :**

(1) OPTICAL WAVES IN LAYERED MEDIA/POSCHI YEH ED. Willey interscience

(2) Laser conditioning of optical thin films CR WOLFE & al. N.I.S.T. public Boulder dammage symposium, CO USA 1989, p.360-375

(3) THIN FILM OPTICAL FILTERS HA MACLEOD, ed. Adam hilger (second edition)

(4) SIMULATED ANNEALING : THEORY AND APPLICATIONS PJM VAN LAARHOVEN 1 EHL AARTS Kluwer academic publishers

(5) Evaluation et réalisation de miroirs diélectriques à profil d'indice continu et périodique (filtres rugates).

thèse de docteur de l'université Joseph Fourier - Grenoble 1
L NOUVFLOT, mai 1993

(6) Réalisation de couches minces de $TiO_2$ et $SiO_2$ en pulvérisation par faisceau d'ions Mémoire d'ingénieur C.N.A.M. M IDA 1990

(7) Conférence SOCIETY OF VACUUM COATERS DALLAS 1993
Reactive ion beam sputter deposition of gradded interface optical thin films of aluminium oxynitride and siliconoxynitride SJ HOLMES & al. Northrop corporation

**Revendications**

1. Miroir à large bande et à haute réflectivité comportant un empilement (4) disposé sur un substrat (8) et formé d'une alternance de couches (12, 14) d'un premier matériau ayant un premier indice de réfraction ($n_1$) et de couches d'un second matériau ayant un second indice de réfraction ($n_2$) supérieur au premier indice de réfraction ($n_1$), caractérisé en ce qu'il comporte en outre une couche de surface (6) d'un troisième matériau disposée sur l'empilement, ladite couche présentant un indice de réfraction qui varie selon un profil continu.

2. Miroir selon la revendication 1, caractérisé en ce que l'indice de réfraction de la couche de surface (6) varie selon un profil continu périodique.

3. Miroir selon l'une des revendications 1 ou 2, caractérisé en ce que l'indice de réfraction de la couche de surface (6) varie selon un profil sinusoïdal.

4. Miroir selon l'une quelconque des revendications précédentes, caractérisé en ce que le substrat (8) est réalisé en un matériau choisi parmi la silice, le quartz et le verre.

5. Miroir selon l'une quelconque des revendications précédentes, caractérisé en ce qu'il comporte en outre une couche métallique (2) disposée entre le substrat (8) et l'empilement (4), de manière à accroître la réflectivité du miroir (1).

6. Miroir selon la revendication 5, caractérisé en ce que la couche métallique (2) est une couche d'aluminium.

7. miroir selon l'une quelconque des revendications précédentes, caractérisé en ce que le premier matériau est du $SiO_2$ et le second matériau est du $TiO_2$.

8. Procédé de réalisation d'un miroir à large bande et haute réflectivité, caractérisé en ce qu'il comprend les étapes suivantes :

    a) - dépôt sur un substrat (8) d'une couche métallique (2),
    b) - formation sur la couche métallique d'un empilement alterné (4) de couches (12, 14) d'un premier et d'un second matériau ayant respectivement un premier indice de réfraction ($n_1$) et un second indice de réfraction ($n_2$) supérieur au premier indice de réfraction,
    c) - formation sur l'empilement d'une couche d'un troisième matériau présentant un indice de réfraction qui varie selon un profil continu et périodique.

9. Procédé selon la revendication 8, caractérisé en ce que l'empilement est réalisé selon une technique de pulvérisation par faisceau d'ions.

10. Procédé selon l'une des revendications 8 ou 9, caractérisé en ce que la couche à indice variable est réalisée selon une technique de pulvérisation par faisceau d'ions assistée par faisceau d'ions.

11. Procédé selon la revendication 8, caractérisé en ce que la couche de troisième matériau est une couche d'oxynitrure de silicium.

FIG. 1

FIG. 2

FIG. 3

EP 0 742 453 A1

FIG. 4

FIG. 5

FIG. 6

FIG. 7

Office européen
des brevets

## RAPPORT DE RECHERCHE EUROPEENNE

Numero de la demande

EP 95 40 1108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-5 004 308 (HALL RANDOLPH L ET AL) 2 Avril 1991<br>* colonne 2, ligne 8 - ligne 38 *<br>--- | 1,8 | G02B5/08<br>G02B5/28<br>G02B1/10 |
| X | WO-A-85 01115 (HUGHES AIRCRAFT CO) 14 Mars 1985<br>* page 1, alinéa 1 *<br>* page 1, ligne 18 - ligne 22 *<br>* page 2, ligne 14 - ligne 29 *<br>* page 5, ligne 28 - ligne 33 *<br>* page 6, ligne 11 - ligne 16 *<br>* page 20, ligne 8 - ligne 12;<br>revendications 1,2,12,13,15; figure 2 * | 1,8 | |
| A | | 2,3 | |
| | --- | | |
| A | EP-A-0 280 299 (MATSUSHITA ELECTRIC IND CO LTD) 31 Août 1988<br>* abrégé; figure 5 *<br>* page 2, ligne 29 - ligne 30 *<br>--- | 1,4-6 | |
| A | WO-A-90 02946 (UNITED STATES DEPARTMENT OF ENERGY) 22 Mars 1990<br>* page 28, alinéa 3 - page 29, alinéa 2 *<br>* page 9, alinéa 2 *<br>* page 6, alinéa 2 *<br>* page 1, alinéa 3 - alinéa 4 *<br>--- | 1 | DOMAINES TECHNIQUES RECHERCHES (Int.Cl.6)<br><br>G02B |
| A | JOURNAL OF APPLIED PHYSICS, 15 AUG. 1989, USA,<br>vol. 66, no. 4, ISSN 0021-8979,<br>pages 1805-1809,<br>NETTERFIELD R P ET AL 'Ion-assisted deposition of mixed TiO/sub 2/-SiO/sub 2/ films'<br>* abrégé *<br>--- <br>-/-- | 7 | |

Le présent rapport a été établi pour toutes les revendications

| Lieu de la recherche | Date d'achèvement de la recherche | Examinateur |
|---|---|---|
| BERLIN | 17 Octobre 1995 | Hylla, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

Office européen
des brevets

**RAPPORT DE RECHERCHE EUROPEENNE**

Numero de la demande

EP 95 40 1108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FOURTH TOPICAL MEETING ON OPTICAL INTERFERENCE COATINGS, TUCSON, AZ, USA, 12-15 APRIL 1988, vol. 28, no. 14, ISSN 0003-6935, APPLIED OPTICS, 15 JULY 1989, USA, pages 2940-2944, DONOVAN E P ET AL 'Near infrared rugate filter fabrication by ion beam assisted deposition of Si/sub (1-x)/N/sub x/ films' * page 2941, alinéa C * | 9,10 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| BERLIN | 17 Octobre 1995 | Hylla, W |